# EUROPEAN PATENT APPLICATION

(11) **EP 2 076 030 A2**
(43) Date of publication of application: **01.07.2009**
(21) Application number: 08169632.0
(22) Date of filing: 21.11.2008
(51) Int. Cl.: H04N 5/445, H04N 5/44

(54) **Video signal processor**

(30) Priority: 18.12.2007 JP 2007326354
(71) Applicant: Sony Corporation, Tokyo 108-0075 (JP)
(72) Inventor: Kondo, Tetsujiro, Tokyo, Tokyo 108-0075 (JP); Watanabe, Yoshinori, Tokyo, Tokyo 108-0075 (JP)
(74) Representative: Körber, Martin Hans

(57) **Abstract**

Disclosed is a signal processor includes a contents receiver receiving or storing contents of stream data, a characteristic extracting unit extracting a prescribed amount of characteristic of the contents received by the contents receiver, a detector detecting viewing time or hearing time for the contents received by the contents receiver, and a processor calculating information on a viewing status or hearing status of the contents determined based on an extraction status of the amount of characteristic extracted by the characteristic extracting unit and the viewing time or hearing time for the contents, and outputting the calculated information on the viewing status or hearing status of the contents.

## Description

### CROSS REFERENCES TO RELATED APPLICATIONS

The present invention contains subject matter related to Japanese Patent Application JP 2007-326354 filed in the Japanese Patent Office on December 18, 2007, the entire contents of which being incorporated herein by reference.

### BACKGROUND OF THE INVENTION

### Field of the Invention:

The invention relates to a signal processor, a signal processing method suitable for applying the method to control of displaying contents of stream data on an image display apparatus, and a computer program to which the signal processing method is applied, and a recording medium on which such computer program is recorded.

### Description of the Related Art:

Telop (the term "telop" indicates text superimposed on the screen) is often superimposed on the screen of image contents such as a television program broadcasted on the television. The contents of the images are often described using the telop. For example, in a news program, the contents of the images may be described by superimposing the telop on the lower side of the screen on television. The contents of images on a program other than the news program are also described by superimposing the telop on the screen.

In viewing such one-hour image program, a user or viewer usually consumes one hour for viewing the image program. If the user intends to consume less time than one hour for viewing such program, the user usually carries out fast-forward reproduction using a remote controller. However, some users may sometimes intend to fast-forward one content of the program to the next once having checked the content of the program with text of telop. Conversely, some other users may intend to view the program, the screen of which the telop is superimposed, without conducting fast-forward reproduction of the program. Further, time consumed to read and understand the gist of the contents of the program via the telop may largely differ between individuals when users read and understand the telop that describes contents of the program.

Japanese Unexamined Patent Application Publication No. 2007-184962 discloses technology for facilitates understanding the gist of contents of search images while reproducing the search images. In this technology, a signal indicating the presence of telop is recorded on a recording medium, so that the presence of telop in the search images is easily searched.

### SUMMARY OF THE INVENTION

As described above, it seems difficult to determine how long it is to be optimal duration in displaying image contents to viewers in general. Specifically, when the images, contents of which a viewer can grasp easily, are displayed using telop, display duration of the telop may be too long for viewers. It is also difficult to determine how fast it is to be optimal duration to present audio sound of image contents to audience.

According to embodiments of the invention, viewers or audience can optimally read and hear the image contents of the program or the like and the audio sound thereof.

The embodiment of the invention includes a contents receiver receiving or storing contents of stream data, a characteristic extracting unit extracting a prescribed amount of characteristic of the contents received by the contents receiver, and a detector detecting viewing time or hearing time for the contents received by the contents receiver. The embodiments of the invention further includes a processor calculating information on a viewing status or hearing status of the contents determined based on an extraction status of the amount of characteristic extracted by the characteristic extracting unit and the viewing time or hearing time, and outputting the calculated information on the viewing status or hearing status of the contents.

With the embodiment, the information on the viewing status or hearing status of the image contents is output, and the viewing status or hearing status of the image contents can be specified by the output information on the viewing status or hearing status of the image contents.

According to the embodiments of the invention, the information on the viewing status or hearing status of the image contents is created and output, and then the viewing status or hearing status of the image contents can be specified utilizing the output information on the viewing status or hearing status of the image contents. Thus, since the reproduction of the image contents can be controlled based on the output information, a user can view or hear the image or audio sound of the contents reproduced in an optimal condition.

### BRIEF DESCRIPTION OF THE DRAWINGS

FIG. 1 is a block diagram illustrating an example of an overall configuration according to one embodiment of the invention.
FIG. 2 is an explanatory diagram illustrating a system configuration example according to one embodiment of the invention.
FIG. 3 is a flowchart illustrating an overall processing according to one embodiment of the invention.
FIG. 4 is a flowchart illustrating a determination processing example of whether to have identical information frames according to one embodiment of the invention.
FIG. 5 is a flowchart illustrating an image analyzing processing according to one embodiment of the invention.
FIG. 6 is a flowchart illustrating an estimating processing of required viewing time according to one embodiment of the invention.
FIG. 7 is an explanatory diagram illustrating an example of a table according to one embodiments of the invention.
FIG. 8 is an explanatory diagram illustrating an example of another table (categorical example) according to another embodiment of the invention.
FIG. 9 is an explanatory diagram illustrating a system configuration example according to still another embodiment of the invention.

### DESCRIPTION OF THE PREFERRED EMBODIMENTS

Preferred embodiments of the invention will now be described with reference to accompanying drawings.

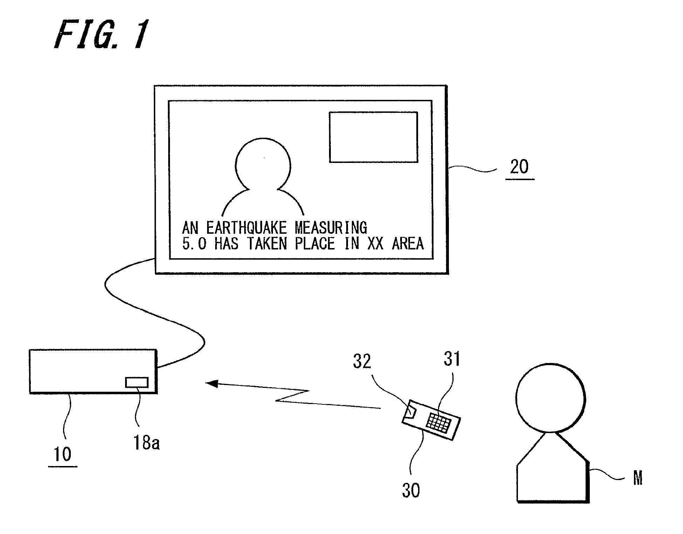

An overall system configuration is described with reference to FIG. 1. A system of the embodiment of the invention includes an image reproducing apparatus 10 that is connected to a display apparatus 20 such that images of image contents reproduced by the image reproducing apparatus 10 are displayed on the display apparatus 20. The image reproducing apparatus 10 includes a remote controlling signal receiver 18a that receives remote controlling signals transmitted by a transmitter 31 of a remote controller 30. The remote controller 30 includes a key 32 as an operation unit, and a user M operates the key 32 of the remote controller 30 so as to carry out various kinds of operation, such as to start reproducing, fast-forward, and stop the image contents.

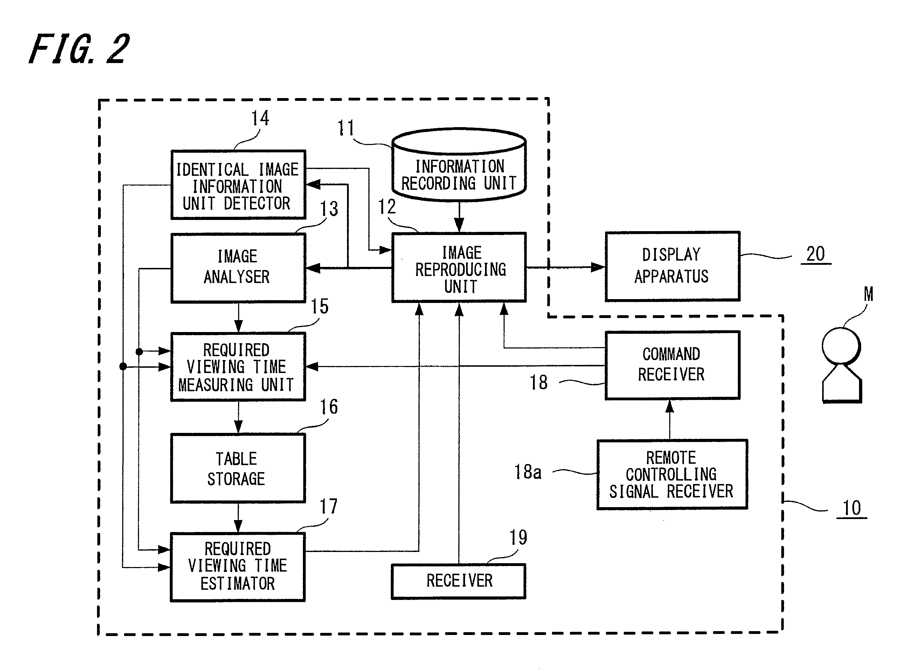

Next, an internal configuration of the image reproducing apparatus 10 will be described with reference to FIG. 2. The image reproducing apparatus 10 includes a information recording unit 11 that records and reproduces the image contents received by a receiver 19. The image contents in this embodiment imply stream data, which specifically indicates dynamic image signals and audio signals. An example of the information recording unit 11 includes a mass-storage device such as a hard-disk drive. The receiver 19 is used for receiving the image contents. For example, the receiver 19 includes a tuner for receiving broadcast signals or a receiving device for receiving image contents via the Internet.

The image contents recorded on the information recording unit 11 are read by an image reproducing unit 12, which generates image data for reproduction and supplies the generated image data to the display apparatus 20. The display apparatus 20 displays images of the supplied image data. In addition, although not shown, if the image data is provided with audio data, the audio data is also read from the information recording unit 11 and supplied to the display apparatus 20 by the image reproducing unit 12, so that audio sound is output from a speaker of the display apparatus 20.

The image reproducing unit 12 reproduces the data based on instructions given from a command receiver 18. The command receiver 18 is supplied with the remote controlling signal received by the remote controlling signal receiver 18a. The remote controlling signal receiver 18a receives the remote controlling signal supplied from a separately provided remote controller. The remote controller is operated by the user M who views and hears the image and sound presented on the display apparatus 20.
The remote controlling signal is transmitted from the remote controller as an infrared signal and a radio signal. The instructions based on the remote controlling signal includes reproducing the image contents, such as starting, pausing, and stopping reproducing the image contents, or locating the image contents, such as fast-forwarding, and skipping the image contents. The remote controlling signal receiver 18a receives and transfers the instructions to the command receiver 18, so that the image data reproduced by the image reproducing unit 12 are appropriately displayed on the display apparatus 20 based on the received instructions. The instructions received from the command receiver 18 are also supplied to a required viewing time measuring unit 15.

The image reproducing apparatus 10 further includes an image analyzer 13 that analyzes a reproducing status at the image reproducing unit 12. The image reproducing unit 12 transfers the reproduced images to the image analyzer 13, while allowing an identical image information unit detector 14 to detect consecutive identical images having identical contents. The image analyzer 13 analyzes the number of characters in telop when the telop has been superimposed on the images. The image analyzer 13 also obtains the difference between pixel areas of the image, and outputs values of the number of characters and those of the obtained pixel area differences as the outcome of the analysis. The consecutive identical images having identical contents detected by the identical image information unit detector 14 imply that the identical images having identical contents are continuously reproduced. Specifically, the identical image information unit detector 14 operates as a scene detector to detect whether the identical images having identical contents are continuously reproduced. The detecting processing to detect identical images is carried out by calculating the differences between pixels of an immediately preceding frame image and those of a current frame image. Specific processing examples of the image analyzer 13 and the identical image information unit detector 14 will be described later.

The detected outcome of the image analyzer 13 and the identical image information unit detector 14 are transferred to the required viewing time measuring unit 15 and a required viewing time estimating unit 17, respectively. The required viewing time measuring unit 15 is also supplied with the instructions from the command receiver 18, and calculates required viewing time based on the instructions and the results obtained by the image analyzer 13 and the identical image information unit detector 14. Specific processing examples of calculating the required viewing time will be described later. The calculated required viewing time is stored in a table storage 16 formed of a memory.

The required viewing time estimating unit 17 estimates the required viewing time to reproduce images at the image reproducing unit 12 based on information supplied from the table storage 16, the image analyzer 13, and the identical image information unit detector 14, and the estimated results are transferred to the image reproducing unit 12. A specific processing example of calculating the required viewing time will be described later. When the estimated results are supplied to the image reproducing unit 12, a reproducing status of the images being reproduced is controlled. When the estimated results (described later) indicate that the images have been reproduced in sufficient time for viewing the images, subsequent images are reproduced.

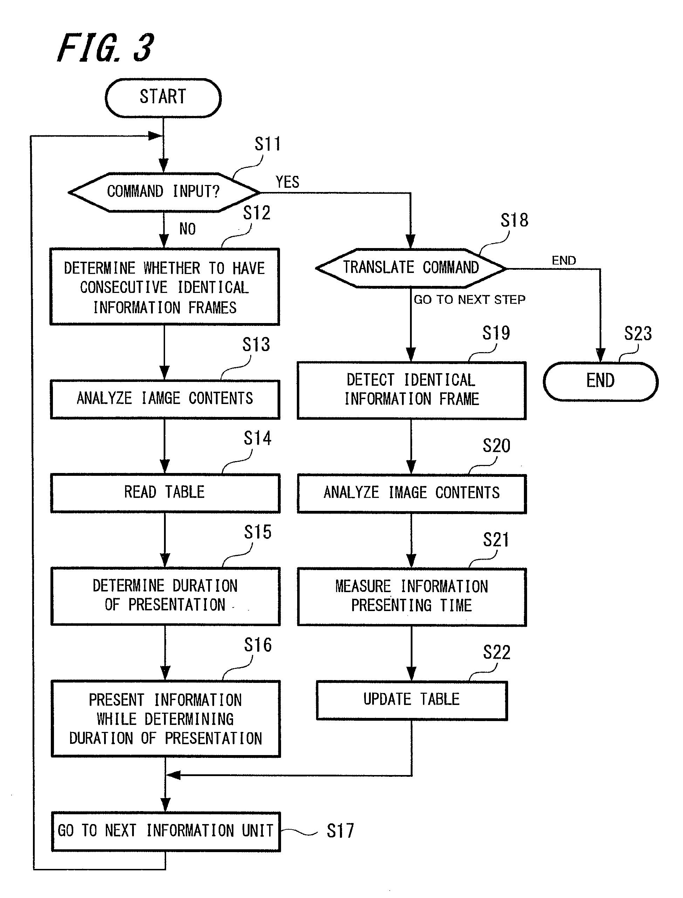

Next, processing operation in reproducing the image contents recorded by the information recording unit 11 of the image reproducing apparatus 10 is described with reference to flowcharts in FIG. 3 to FIG. 6. An overall processing status is described with reference to FIG. 3. Specifically, whether a command is input from the command receiver 18 of the image reproducing apparatus 10 is determined (STEP S11), and when no input of command is detected, the image contents are analyzed during reproducing the images by the image reproducing unit 12. Specifically, whether to have consecutive identical information frames is determined (STEP S12), the contents of the images are analyzed (STEP S13), table data is read from a table storage 16 (STEP S14), and duration or time for presenting the images per unit is determined (Step S15). Timing of reproducing image contents is controlled by the image reproducing unit 12 so as to present the information during the determined duration. When the timing of reproducton is controlled, processing of next information unit is carried out (STEP S17).

When command input by a user is detected at step S11, the command is translated (STEP S18). When the translated command is an end command that indicates stopping the reproduction of the image contents, the processing will end (STEP S23). When the command is that other than the end command, whether to have consecutive identical information frames is determined (STEP S19), whether the contents of the images are analyzed (STEP S20), and how long to have duration of presenting the information per unit are determined (Step S21). When the duration of presenting the information per unit is measured, the information on the measured duration of presentation is stored in the table storage 16 to update the information thereof.

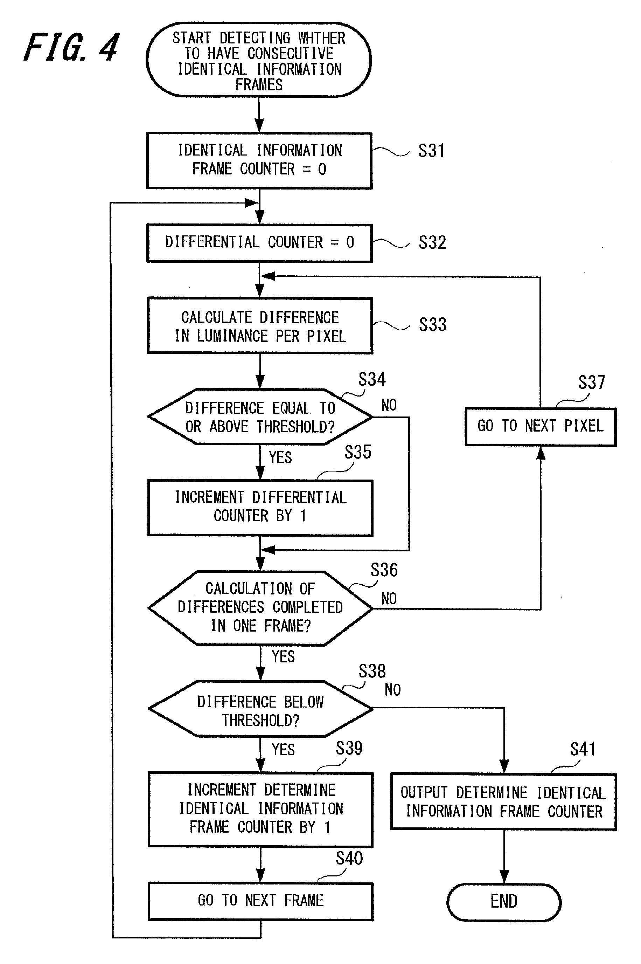

Next, a processing example of detecting (determining) consecutive identical information frames by the identical image information unit detector 14 is described with reference to a flowchart in FIG. 4. When processing of determining whether to have consecutive identical information frames has started, identical information frames counter is reset to "0" (STEP S31), and a differential counter is also reset to "0" (STEP S32). Subsequently, the difference in luminance between an original image (reference image) and a current image is calculated per pixel (STEP S33), and whether the difference obtained equals or exceeds the threshold is determined (STEP S34). If the difference obtained is equal to or above the threshold, the count value of the differential counter increments by one (STEP S35). If the difference obtained is below the threshold, the count value of the differential counter remains unchanged. Subsequently, whether the difference in luminance has been calculated in all pixels is determined (STEP S36). If the difference has not been calculated in all pixels, processing is shifted to next unevaluated pixel (STEP S37) to calculate the difference in luminance again (STEP S33).

If the differences have been calculated in all pixels in one frame at STEP 36, whether the count value of the differential counter is below the threshold is determined (STEP S38). If the difference obtained is below the threshold, the counter value of the identical information frame counter increments by one (STEP S39), and processing of the next image frame is carried out (STEP S40). The processing for the next image frame is carried out from STEP S32.

If the count value of the differential counter is not below the threshold; that is, the differential counter is equal to or above the threshold at STEP S38, the current count value of the identical information frame counter is output (STEP S41), and then the current processing to determine whether to have the consecutive identical information frames will end. The processing from STEP S31 to S41 will be iterated while image contents are continuously reproduced. In the determination of whether to have consecutive identical information frames as shown in the flowchart of FIG. 4, when the user carries out no operation while the image contents are reproduced, duration or time for presenting consecutive identical information frames will be detected. However, when the user operates to give instructions such as fast-forwarding reproduction of image contents, duration or time for reproducing consecutive identical information frames until such operation is given by the user is detected; that is, duration or time for consecutively displaying identical information frames on the display apparatus 20 is detected.

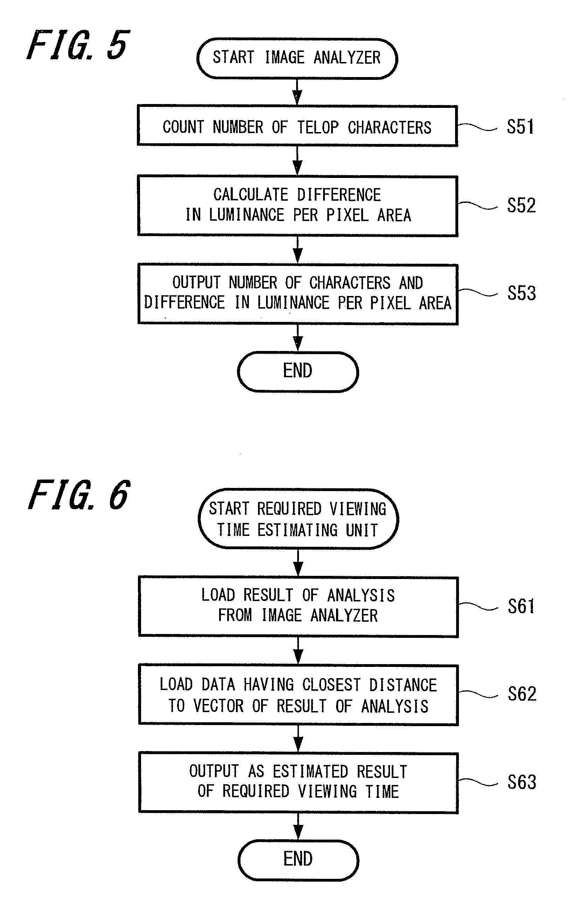

Next, processing at an image analyzer 13 will be described with reference to a flowchart in FIG. 5. First, if telop is contained in one frame image to be reproduced, the number of telop characters in one frame image is counted (STEP S51). The difference between the original and the current images per pixel area is also calculated (STEP S52). The difference between the original and current images per pixel area is calculated in the same manner as calculating the difference in luminance between the two images per pixel at the identical image information unit detector 14. The number of telop characters and the difference between the two images per pixel area obtained in one frame are then output (STEP S53).

Next, an example of estimating processing for required time carried out by the required viewing time estimating unit 17 will be described with reference to a flowchart of FIG. 6. In estimating processing for required time, analyzed data is received from the image analyzer 13 (STEP S61). Having received the resulting data of the analysis obtained from the image analyzer 13, data having the closest distance to the vector of the resulting analysis in the table is read (STEP S62). The required viewing time indicated by the data in the table is output as an estimated result (STEP S63).

The output estimated result of required viewing time is supplied to the image reproducing unit 12 to control the reproduction of the image program. For example, when duration or time of continuously viewing one static image is equal to the time indicated by the estimated result of required viewing time, reproducing position is shifted to the next unit of images.

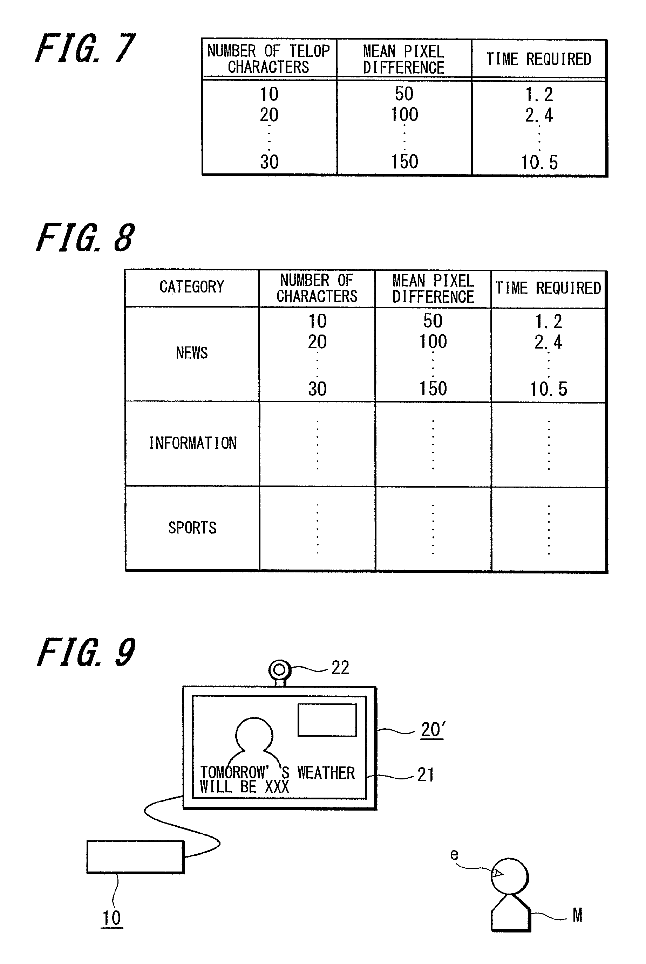

FIG. 7 shows an example of a table stored in the table storage 16. The example shows the number of telop characters in an image, mean difference per pixel corresponding to the number of characters, and mean duration (sec) of required viewing time for the image. As FIG. 7 shows, as the number of telop characters displayed increases in one screen, the required viewing time also increases.

With the table shown in FIG. 7, if images having identical information (implying the status close to static images) are consecutively displayed, the required viewing time matched with the same conditions (i.e., the number of telop characters, the mean difference per pixel, and the mean duration) is read from the table. Accordingly, the required viewing time read from the table is determined as the estimated viewing time for the currently displayed image. When displaying time exceeds the time read from the table, the next unit of image will be displayed. Thus, when an image is determined to mainly contain telop characters and consecutive images having identical information are determined as being currently displayed, the display status will be changed based on the previous data of the required viewing time read from the table, so that the identical images will not be displayed for unnecessarily long time. In the processing shown in the flowchart of FIG. 3, presenting time for images are calculated based on two amounts of the characteristic factors; that is; the number of characters in one screen, and mean duration or mean time of consecutively displaying images having identical contents (identical scenes), however, the presenting time for images are calculated with reference only to one of these characteristic factors tabulated. Other factors can also be used for calculating the presenting time of image.

In the example of FIG. 7, a categorical factor of the image program to be reproduced is not included in calculating the time required for viewing images; however, the number of telop characters, the mean pixel difference, and the mean duration or mean time (sec) required for viewing images can be classified for each category of the image program so as to create a table to be stored as shown in FIG. 8. When reproducing the image program, data of category matched with the category of the image program to be reproduced is read from the table, and the duration or time required for viewing the image program may be calculated based on the read data from the table. In the example of FIG. 8, data is classified into three categories; namely, the news, information, and sports. If a category of the image contents is unknown, unknown category may be provided so that the unknown category of the table can be referred in reproducing the image contents of unknown category.

In the example of FIG. 7, the number of operators for the image reproducing apparatus 10 of this embodiment is estimated as one, so that all the information obtained by the user's operation of the remote controller 30 is collected in one table. However, when a plurality of users or operators share to use one image reproducing apparatus 10, information obtained by the plurality of users' operation of the remote controller 30 may be collected in separate tables corresponding to the individual users that can be identified with a certain operation or mechanism of individuals. Accordingly, the information of the table corresponding to the user viewing the image program may be used in reproducing the image program. More accurate image reproducing duration or time can be set in this manner.

In the examples described so far, the time required for the user viewing the image program is determined based on the user's operation to reproduce the image contents using the remote controller as the time corresponding to the number of telop characters in the table. However, the time required for viewing the image contents may be calculated based on any other processing. For example, as shown in FIG. 9, a camera unit 22 may be arranged on top of a screen 21 of a display apparatus 21' to image the face of a viewer M, the viewer M's sight line e can be determined based on the image captured by the camera unit 22.

The time for the viewer M to read characters displayed as telop can be estimated based on the change in the viewer M's sight line e. When the viewer M's reading time for the telop is estimated, the estimated time and the number of telop characters are stored in the table as a required viewing time. In reproducing the image contents, the required viewing time is read from the table with reference to the number of characters so as to change reproducing duration or time complied with the next unit of images. Thus, the image reproducing duration or time can be estimated by the processing other than the viewer's input operation.

In the configuration of FIG. 2, the image reproducing apparatus and the display apparatus are separately provided; however, the image reproducing apparatus may be incorporated in the television receiver such that a series of processing from estimating the required viewing time to displaying the image contents can be carries out by one apparatus. Alternatively, as shown in FIG. 2, when the image reproducing apparatus and the display apparatus are separately provided, the image reproducing apparatus (image processing apparatus) can only output information on the estimated required time to supply to the display apparatus, and setting processing such as setting displaying duration can be carried out by the display apparatus.

In the embodiments described so far, the reproducing processing of the image program has been described; however, in the reproducing processing of the audio sound program, when the identical sound having identical contents are continuously reproduced, reproducing position is shifted to the next unit of sound complied with the required hearing time read from the table.

In the embodiments described so far, the embodiments are applied to the image reproducing apparatus; however, the series of processing can be programmed to cause an information processing apparatus, such as a personal computer, to execute the computer program such that the information processing apparatus can carry out the same operation as that of the image producing apparatus in FIG. 2. In this case, the computer program for the series of processing according to this embodiment can be recorded on various recording media which may then be provided for the viewer of the image contents of stream data.

It should be understood by those skilled in the art that various modifications, combinations, sub-combinations and alterations may occur depending on design requirements and other factors insofar as they are within the scope of the appended claims or the equivalents thereof.

## Claims

1. A signal processor comprising:
a contents receiver receiving or storing contents of stream data;
a characteristic extracting unit extracting a prescribed amount of characteristic of the contents received by the contents receiver;
a detector detecting viewing time or hearing time for the contents received by the contents receiver; and
a processor calculating information on a viewing status or hearing status of the contents determined based on an extraction status of the amount of characteristic extracted by the characteristic extracting unit and the viewing time or hearing time for the contents, and outputting the calculated information on the viewing status or hearing status of the contents.

2. A signal processor according to Claim 1, further comprising:
a scene change detector detecting scene change of the contents received by the contents receiver, wherein
the contents received by the contents receiver include dynamic stream data, and
the amount of characteristic of the contents extracted by the characteristic extracting unit is obtained for each scene detected by the scene change detector.

3. A signal processor according to Claim 2, further comprising:
an input unit with which a viewer or audience carries out operation relating to reproducing the contents of stream data, wherein
the viewing time or the hearing time is detected by the detector based on an operation status by the input unit.

4. A signal processor according to Claim 2 or 3, wherein
the amount of characteristic extracted by the characteristic extracting unit is based at least on one of factors selected from the number of characters and the mean of image changes in an image of contents data.

5. A signal processor according to one of the Claims 1 to 4, wherein
the processor calculates the amount of characteristic for each category of the contents, and outputs the information on the viewing status or hearing status of the contents.

6. A signal processor according to one of the Claims 1 to 5, further comprising:
a display unit setting time complied with time for the scene change of the contents when displaying the contents based on the information on the viewing status of the contents output by the processor.

7. A method of processing signals, comprising:
extracting a predetermined amount of contents of received or stored stream data;
detecting viewing time or hearing time of the contents; calculating information on a viewing status or hearing status of contents based on an extraction status of the amount of characteristic extracted by the characteristic extracting unit and the detected viewing time or hearing time; and
outputting the calculated information on the viewing status or hearing status of the contents.

8. A computer program causing an information processing apparatus to execute signal processing, the computer program comprising:
extracting a predetermined amount of contents of received or stored stream data;
detecting viewing time or hearing time of the contents; calculating information on a viewing status or hearing status of contents based on an extraction status of the amount of characteristic extracted by the characteristic extracting unit and the detected viewing time or hearing time; and
outputting the calculated information on the viewing status or hearing status of the contents.

9. A recording medium on which the computer program of Claim 8 is recorded.
